# EUROPEAN PATENT APPLICATION

(11) **EP 4 703 849 A1**
(43) Date of publication of application: **04.03.2026**
(21) Application number: 24197526.7
(22) Date of filing: 30.08.2024
(51) Int. Cl.: G06F 3/01, G06Q 10/0639, G09B 9/00

(54) **METHOD AND SYSTEM FOR ACCURATELY ALLOCATING ONE OR MORE TASKS TO WORKERS ON OCCURRENCE OF A HAZARDOUS EVENT IN AN INDUSTRIAL ENVIRONMENT**

(71) Applicant: Siemens Aktiengesellschaft, 80333 München (DE)
(72) Inventor: DEB, Pallav Kumar, 781028 Guwahati, Assam (IN); RAJ, Arun, 635110 Hosur, Tamil Nadu (IN)
(74) Representative: HKW Intellectual Property PartG mbB

(57) **Abstract**

Disclosed is system (100) and method (400) for accurately allocating tasks to workers on occurrence of a hazardous event in industrial environment. The method comprises executing, by the processing unit (302), simulated training session in computer simulated environment (102). The workers (114-1 to 114-N) participate in training session via user devices (202). The method comprises acquiring data from sensors (204-1 to 204-N) associated with the workers. The sensors acquire data pertaining to performance of workers in training session. The method comprises generating behavior matrix for workers in training session. The behavior matrix is designed based on a response of worker to hazardous event in training session. The method comprises mapping workers to tasks defined in training session. The method comprises allocating, tasks to each of the workers when hazardous event occurs in the real-world in industrial environment based on the mapping.

## Description

The present invention relates to a field of computer simulated environments and more particularly relates to a system and method for accurately allocating one or more tasks to workers on occurrence of a hazardous event in an industrial environment trained in a computer simulated environment.

Industrial environments include plurality of machines or assets in an automated factory, or IoT devices interacting with one another. Industrial environments thus often include multiple interconnected components in signal communication with each other, either directly or across a network. Personnel safety is increasingly identified as the primary force in decision making in industrial applications. All production and financial targets, in industries ranging from petrochemicals and refining to the software industry, are secondary to safety concerns. Thus, it is increasingly comment for employees, contractors, and visitors to be briefed on aware safety risks present at a work location.

Many industries are also required to comply with safety standards like OSHAS 18001/BSC. OHSAS 18001 is an internationally recognized occupational, health, and safety management system series standard. Requirements for OHSAS 18001 Occupation health and safety management system include formulation of an Occupational, Health and Safety Management System (OHSMS) with the establishment of an occupational, health and safety (OHS) manual in which the scope of OHSMS is determined; establish an occupational, health, and safety policy and OHS objectives and programs; ensure document and record control; implement and maintain a procedure to identify hazards, assess risk and determine controls in the work place; ensure applicable occupational, health, and safety legislation is identified, communicated within and compliance assessed; define resources, roles, responsibilities, accountability, and authority with regard to the OHSMS; implement an adequate occupational, health, and safety communication, participation, and consultation process; maintain good operational control; plan emergency preparedness and response; meet strict criteria in relation to incident investigation; identify and deal with OHS non conformities by applying corrective and preventative action; monitor and measure the occupational, health, and safety performance of the organization; and audit the system and review the system at a management level periodically.

In certain industries, training mechanisms are used to train people to identify and avoid potential hazards. These training mechanisms range from showing presentations and making people aware of scenarios to live training exercises (e.g., mock drills, firefighting training, etc.). In prior approaches, there is no means for evaluating the trainee's behavior. As such, it can be difficult to evaluate if a trainee truly understands the risks associated with the potential hazard.

There are several problems with conventional drills: firstly, the actual emergency has many complex and dangerous environments, and effective field drilling is difficult to perform; the second exercise has less organization times, and training knowledge cannot be strengthened and consolidated. Thirdly, the dangerous environment simulating an emergency can also endanger the personal safety of the personnel involved. And fourthly, teaching evaluation is not in place. Qualitative and quantitative combined evaluation analysis cannot be performed, and the evaluation investigation range is narrow and the scale is small.

By creating an immersive photo-realistic scenario in the industrial metaverse, these trainings can be made more similar to real-world scenarios. With advanced technologies like multimodal AR, auditory, kinesthetic, and tactile elements can also be added for a fully immersive experience. Additionally, such immersive trainings can be used to assign the best workers for specific scenarios. Let us consider a worker Bob, who reacts especially well during fire hazards, but is less comfortable in water. Such behaviors can be difficult to detect in traditional drills, but are more easily recognizable in immersive trainings. Since a competent person can react with a cool head, this can greatly improve the hazard response in industries

Accordingly, there is a need for systems and methods that create real life-like scenarios that do not expose the trainee to a real hazard, while also providing the ability to monitor and evaluate the response of an individual to such situations.

In light of the above, there exists a need for automatically generating immersive training scenarios for workers in an industrial environment for hazardous events in a computer simulated environment.

Therefore, it is an object of the present invention to provide a system, apparatus and method for automatically generating immersive training scenarios for workers in an industrial environment for hazardous events in a computer simulated environment.

Throughout the present disclosure, the term "industrial environment" may refer to plurality of industrial assets connected with each other to achieve a function. The industrial environment may be comprised of industrial assets such as industrial machines, industrial devices, industrial controllers, and so forth.

Throughout the present disclosure, the term "one or more assets" as used herein refers to any device, system, instrument, or machinery manufactured or used in an industry that may be employed for performing an operation. Example of assets include any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on.

Throughout the present disclosure, the term "computed simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be, for example, a 3D model. It is also possible that physical forces and phenomena, e.g., gravity, are represented in a different way in the computer-simulated environment than in the real world, e.g., gravitational acceleration. For the purpose of this invention, the metaverse is comprised of a plurality of digital twins corresponding to real-world one or more assets in the industrial environment.

The metaverse may comprise a plurality of computer-simulated components. The computer simulated components can, for example, be understood as a representation, in particular, a 3D representation, of a real or physical component. A component can, for example, be a room, a building, an item, or an object. The computer-simulated component can have different functionalities/features, e.g., an access interface. The computer-simulated component further comprises data that are component-specific, e.g., sensor data of a virtual sensor, that can be retrieved, for example, via the access interface. An access to a computer-simulated component can, for example, comprise usage, modification, connection to other computer-simulated components, etc. The computer-simulated component can interact with the computer-simulated environment. For the purpose of this invention, the computer-simulated component may be a digital twin or a plurality of digital twins in the computer simulated environment or metaverse.

The metaverse can be realized by a hosting environment. The hosting environment can be, for example, be implemented as a cloud environment, an edge-cloud environment and/or on specific devices, e.g., mobile devices.

Throughout the present disclosure, the term "digital twin/virtual asset" as used herein refers to digital copy of a physical item (e.g., a real machine) that is created to support data access, command and control, remote configuration, as well as simulation and analytics. A virtual asset is commonly created simultaneously with the real devices and systems, such as processing equipment and sensors in the facility. Once created by a specific vendor for their own specific equipment, the virtual asset can be used to represent the machine in a digital representation of a real world system. The DT is created such that it is identical in form and behavior to the corresponding machine. virtual assets may be supported by the vendors' own IIoT infrastructure. Thus, each virtual asset is associated with one and only one asset. A customer deploying IIoT may thus end up having many such virtual assets deployed on a wide variety of infrastructures because IIoT vendors generally host their solutions on a variety of different cloud platforms (e.g. Microsoft AZURE, Amazon AWS, their own- or third-party data center), and may use a wide variety of open source and other components to create their digital twin/ virtual asset solutions.

Throughout the present disclosure, the term "hazardous events" refers to an emergency event which occurs suddenly and poses a risk of injury, illness, or damage to workers, equipment, or the environment. Identifying and understanding these hazards is crucial for maintaining a safe and healthy workplace. In some scenarios, hazardous events are divided into four levels according to factors such as the property, the severity, the controllability, the influence range and the like of the hazardous event according to the national emergency public event general emergency plan: class i (extra heavy), class ii (heavy), class iii (larger) and class iv (general). According to the occurrence process, property and mechanism of the emergent common events, the emergent events are divided into four types: natural disasters, accident disasters, public health events, social security events and the like. The hazardous events refers to different levels and different types of hazardous events which occur when people perform production activities, such as a laboratory explosion scene, a gas station fire scene, a high-altitude suspension operation high-drop scene, a welding operation electric shock scene, a gas and gas leakage scene for catering, a power distribution room fire scene, a mechanical injury scene of a common product warehouse, an explosion scene of a toxic commodity warehouse, a hazardous chemical leakage scene of a corrosive commodity warehouse, a mechanical injury scene of a refrigeration house, a fire scene of an old-age institution, a fire scene of a business supermarket, a poisoning scene of a liquid ammonia filling station, a liquid ammonia transportation leakage scene and the like

Throughout the present disclosure, the term "training session" or "simulated training session" refers to structured exercises that replicate real-world situations in a controlled computer simulated environment. The training simulation scenarios are designed to help workers practice and improve their skills, knowledge, and decision-making abilities without the risks associated with actual operations. These scenarios are tailored to specific tasks or hazards found in the workplace and are essential for effective training programs. The training simulation scenarios are designed in a manner such that the workers have an immersive and realistic experience of the hazardous event and can improve their skills based on the performance analysis. In an example, the different training scenarios needs to be carried out on each emergency scene, environmental scenes, character roles, equipment facilities, animations, special effects and the like are researched and developed according to emergency knowledge contents, different emergency scenes are loaded according to business needs, and a practical training environment with strong immersion and strong interactivity is constructed.

Throughout the present disclosure, the term "one or more sensors" refers to electronic devices that acquire data pertaining to user behavior during training in the computer simulated environment. The one or more sensors can either be installed in the user device or outside of the user device.

The devices comprise sensors to track users' movements, gestures, and interactions, as well as to provide environmental feedback for a more immersive experience. The one or more sensors include wearable sensors such as heart rate monitors for tracking heart rate and assess stress levels, accelerometers and gyroscopes for measuring movement, posture, and physical activity of the workers, electrodermal activity (EDA) sensors for monitoring skin conductance and assess physiological responses to stress and engagement, temperature sensors for monitoring body temperature and identify signs of physical stress of workers in the training session. The one or more sensors include eye-tracking sensors such as eye-tracking cameras for monitoring where the worker is looking, measuring focus and attention, pupil dilation sensors for assessing engagement and cognitive load by tracking changes in pupil size for workers in the training session. The one or more sensors include hand and gesture tracking sensors such as motion capture gloves for tracking hand movements and gestures, ensuring correct handling of tools and equipment in the training session, kinetic sensors for capturing full-body movements and gestures, used in computer simulated environments. The one or more sensors include sensors integrated in the AR/VR headset such as integrated motion sensors for tracking head movements and orientation in virtual environments, and positional tracking systems for monitoring the worker's position and movement within the simulated training session. The one or more sensors include environmental sensors such as proximity sensors for detecting the distance between the worker and potential hazards or objects in the environment, and pressure sensors for measuring force applied on tools or machinery, ensuring correct operation. The one or more sensors include audio sensors such as microphones for capturing verbal communication and assess clarity and effectiveness, noise dosimeters for measuring exposure to noise levels and ensure compliance with safety standards. The one or more sensors include video cameras such as high-resolution cameras: for record training sessions for later analysis of behavior and actions. The one or more sensors include biometric sensors such as fingerprint scanners for ensuring the identity of the worker participating in the training, facial recognition cameras for monitoring facial expressions and emotional responses. The one or more sensors include smart PPE (Personal Protective Equipment), smart helmets, smart vests with built-in sensors. The one or more sensors include haptic feedback devices for providing tactile feedback during training, enhancing realism and engagement.

Throughout the present disclosure, the term "blockchain" as used herein refers to a decentralized storage system of the ledger at the one or more user devices (which may be considered "nodes" of the system) for storing incident information from various sites. The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

Throughout the present disclosure, the term "database" refers to a storage unit having stored the incident report from various sites. The database may be a structured or non-structured collection of data or information stored in a computer-readable format. The database comprises one or more tables, each consisting of rows and columns, where data is organized, stored, and managed. The data within the database can include text, numbers, images, audio, video, or any other form of electronic data. The database is designed to efficiently store, retrieve, and manipulate large volumes of data, enabling rapid access and retrieval of information for various applications. It provides a centralized repository for organizing and managing data, facilitating data integrity, consistency, and security. The data within the database can be accessed, modified, or queried through a database management system (DBMS), which provides a set of software tools and interfaces to interact with the database. The DBMS allows users or applications to perform operations such as inserting, updating, deleting, or searching for data within the database which may be of various types, including but not limited to relational databases, NoSQL databases, distributed databases, in-memory databases.

Throughout the present disclosure, the term "workers" as used herein refers to any person, avatar, virtual assistant, or any other device or system participating in the training session in the computer simulated environment.

The object of the present invention is achieved by a method for accurately allocating one or more tasks to workers on occurrence of a hazardous event in an industrial environment. The method comprises executing, by the processing unit, a simulated training session in the computer simulated environment. Herein, the one or more workers participate in the training session via user devices. The method comprises acquiring, by the processing unit, data from one or more sensors associated with the workers, the one or more sensors configured to acquire data pertaining to performance of one or more workers in the training session. The method comprises generating, by the processing unit, a behavior matrix for each of the workers in the training session based on the data acquired from the one or more sensors. Herein, the behavior matrix is designed based on a response of the worker to the hazardous event in the training session. The method comprises mapping, by the processing unit, each of the workers to one or more tasks defined in the training session based the behavior matrix of each of the one or more workers, wherein the one or more tasks are actions to be performed by the workers in order to contain the hazard in the training session. The method comprises allocating, by the processing unit, the one or more tasks to each of the one or more workers when the hazardous event occurs in the real-world in the industrial environment based on the mapping.

According to an embodiment, the one or more sensors comprises at least one of: heart rate sensors, accelerometers, gyroscopes, eye-tracking sensors, hand gesture and tracking sensors, position tracking sensors, electrodermal sensors, temperature sensors, integrated motion sensors, proximity sensors, pressure sensors, audio sensors, video cameras, biometric sensors, haptic sensors, and EEG sensors.

According to an embodiment, the method of generating the behavior matrix for each of the workers further comprises identifying, by the processing unit, one or more objectives of the training session based on requirements of the training and a type of hazardous event. The method comprises determining, by the processing unit, one or more key behavior and skills that workers need to demonstrate during the training based on the objectives of the training. The method comprises defining, by the processing unit, one or more behavioral indicators that demonstrate proficiency of the one or more tasks performed by the workers during the training. The method comprises defining, by the processing unit, a scoring system that quantifies the performance of the one or more workers based on the data acquired from the one or more sensors and the defined behavioral indicators. The method comprises generating, by the processing unit, the behavior matrix for each of the workers participating in the training session based on the performance of the one or more workers in the simulated training session.

According to an embodiment, the method further comprising classifying each of the workers into a skill level based on the behavior matrix, wherein the skill level of workers is one of: competent, semi-competent, and non-competent.

According to an embodiment, the method of mapping each of the workers to a one or more tasks defined in the training session based the behavior matrix of each of the one or more workers comprises identifying, by the processing unit, a skill type and skill level of each of the workers from the corresponding behavior matrix. The method comprises defining, by the processing unit, one or more tasks to be performed by the workers during the occurrence of the hazardous event. The method comprises mapping, by the processing unit, each of the workers to the one or more tasks based on the defined skill type and skill level of each of the workers.

According to an embodiment, the method further comprising storing personal information of the workers, data from one or more sensors, and corresponding behavior matrix of each of the workers in a blockchain.

The object of the invention is also achieved by an apparatus for accurately allocating one or more tasks to workers on occurrence of a hazardous event in an industrial environment. The apparatus comprises one or more processing units, memory communicatively coupled to the one or more processing units. The memory comprises a module stored in the form of machine-readable instructions executable by the one or more processing units. The module is configured to perform the aforementioned method steps.

The object of the invention is also achieved by a system for accurately allocating one or more tasks to workers on occurrence of a hazardous event in an industrial environment. The system comprises a computer simulated environment for executing simulated training scenarios for the one or more workers. The system further comprises one or more sensors communicatively coupled to the computer simulated environment. The one or more sensors acquire data pertaining to performance of one or more workers in the training session. The system further comprises the apparatus as mentioned above. The apparatus is communicatively coupled to the computer simulated environment. The apparatus is configured for accurately allocating one or more tasks to workers on occurrence of a hazardous event in an industrial environment according to the aforementioned method steps.

The object of the invention is also achieved by a computer program product comprising machine readable instructions, that when executed by one or more processing units, cause the one or more processing units to perform the aforementioned method steps.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.
- FIG 1: illustrates a block-diagram of a system for accurately allocating one or more tasks to workers on occurrence of a hazardous event in an industrial environment, in accordance with an embodiment of the present invention;
- FIG 2: is a block diagram of an exemplary apparatus for accurately allocating one or more tasks to workers on occurrence of a hazardous event in an industrial environment., according to an embodiment of the present invention; and
- FIG 3: is a flowchart depicting steps of a method for accurately allocating one or more tasks to workers on occurrence of a hazardous event in an industrial environment, according to an embodiment of the present invention.
- FIG 4: is a flowchart depicting steps of a method 400 for accurately allocating one or more tasks to workers on occurrence of a hazardous event in an industrial environment, accordingly to an embodiment of the present invention

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

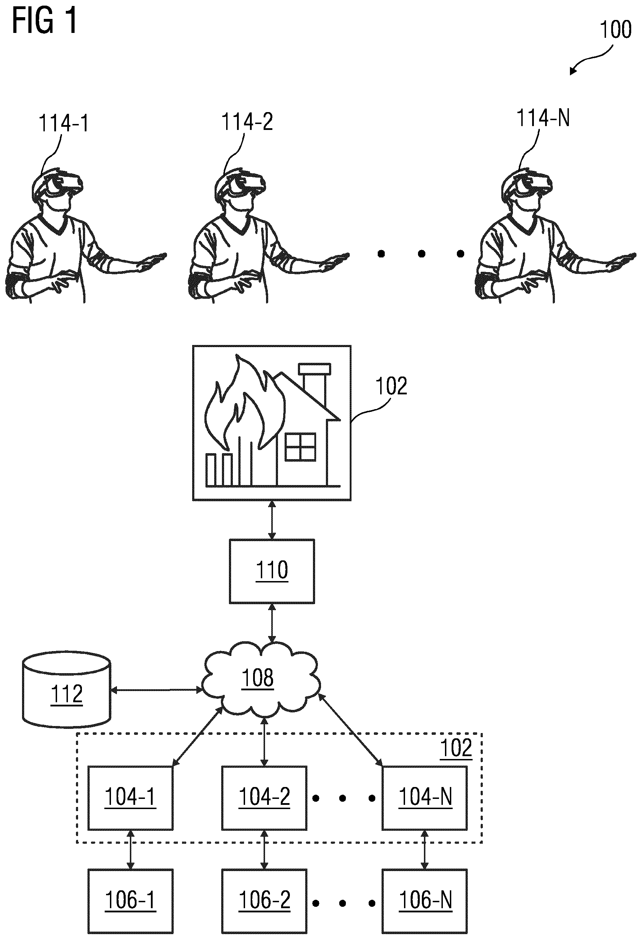

FIG 1 is a block diagram of a system 100 for accurately allocating one or more tasks to workers on occurrence of a hazardous event in an industrial environment, according to an embodiment of the present invention. The system 100 comprises a computer simulated environment 102 hosting a plurality of virtual assets 104-1 to 104-N, one or more assets 106-1 to 106-N corresponding to each virtual asset 104-1 to 104-N, and an apparatus 110 communicating over a communication network 108. The system also comprises a database 112. In particular, the plurality of virtual assets 104-1 to 104-N corresponding to one or more assets 106-1 to 106-N are collaborating with one another in the metaverse to realize the virtual asset or an industrial digital twin, and executing a simulated training session for the workers 114-1 to 114-N. The one or more assets may be associated with a client device (not shown). Non-limiting examples of client devices include, personal computers, workstations, personal digital assistants, human machine interfaces. The client device may enable an owner or operator of the one or more assets to view digital certificates, permissions, access requests etc. associated therewith.

The computer simulated environment 102 is a three-dimensional (3D) representation of a real or physical world. It can be understood as a virtual world representing one or more assets 104-1 to 104-N of the real-world such as machines, robots, conveyors, cranes, drills, etc.

The computer-simulated environment 102 is accessible by a user, i.e., it is accessible from the real/physical world. In particular, the computer-simulated environment 102 can be understood as the "metaverse" or sometimes referred to as the "industrial metaverse" hereinafter. It is also possible to interact with the computer-simulated environment 102, i.e., to influence or use processes, components and/or functions in the computer-simulated environment 102. The user or the avatar may interact with the objects rendered in the metaverse.

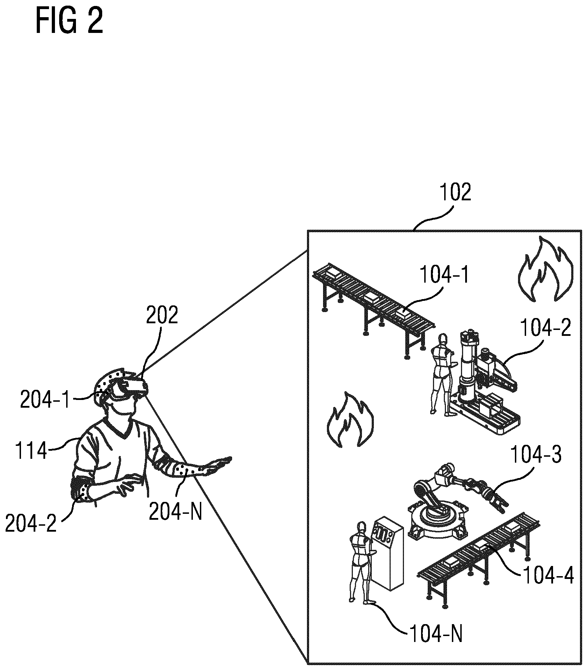

For example, it is possible that a user can access the computer-simulated environment 102 via an interface, e.g., a virtual reality (VR) or augmented reality (AR) interface. For the purpose of this invention, the metaverse is comprised of one or more virtual assets 104-1 to 104-N rendered corresponding to the one or more assets 106-1 to 106-N interacting in the industrial environment. The metaverse 102 is capable of executing simulated training sessioning for the workers via user devices (as shown in FIG. 2). The metaverse 102 may comprise a plurality of computer-simulated components. The computer simulated components can, for example, be understood as a representation, in particular a 3D representation, of a real or physical component. A component can, for example, be a room, a building, an item, or an object. The computer-simulated component can have different functionalities/features, e.g., an access interface. The metaverse can be realized by a hosting environment. The hosting environment can be, for example, be implemented as a cloud environment, an edge-cloud environment and/or on specific devices, e.g., mobile devices.

The computer simulated environment 102 is configured for rendering trraining scenarios for training the workers in the industrial environment. The training scenarios are run as training execrises in the comupter simulated environment 102 and responses to the training are recorded as the training proceeds. The workers 114-1 to 114-N enter the training scnerio in the computer simulated environemnt via user devices such as AR/VR headsets (as shown in FIG 2).

In one embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The apparatus 110 includes a module for accurately allocating one or more tasks to workers 114-1 to 114-N on occurrence of a hazardous event in an industrial environment.

In an example, the system 100 comprises a cloud computing device configured for providing cloud services for automatically generating immersive training scenarios for workers in an industrial environment for hazardous events in a computer simulated environment over a distributed network. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

FIG 2 is an exemplary illustration of a user 114 participating in a simulated training session in the computer simulated environment 102, according to an embodiment of the present invention. As maybe seen, the user 114 is equipped with a user device 202 configured for visualization of the simulation of one or more virtual assets (104-1 to 104-N) and the simulated training session in the computer simulated environment 102. In an example, the user device 202 comprises a display module that presents visual information to the user, rendering one or more assets interacting in the training session, in a realistic and immersive manner. The display module may include a high-resolution screen, holographic display, augmented reality (AR) glasses, or any other suitable technology for visually presenting virtual content to the user. Additionally, the user device 202 incorporates one or more sensors 204-1 to 204-N to capture the user's movements and gestures, allowing for real-time interaction and navigation within the metaverse. The one or more sensors 204-1 to 204-N may inlcude cameras, motion trackers, heart rate sensors, accelerometers, gyroscopes, eye-tracking sensors, hand gesture and tracking sensors, position tracking sensors, electrodermal sensors, temperature sensors, integrated motion sensors, proximity sensors, pressure sensors, audio sensors, video cameras, biometric sensors, haptic sensors, and EEG sensors or any other suitable means of capturing and interpreting user movements. Furthermore, the user device 202 includes connectivity features to facilitate communication and data exchange with the metaverse infrastructure. These features may include wireless communication capabilities, such as Wi-Fi, Bluetooth, or cellular connectivity, enabling the user device 202 to connect to the metaverse platform, retrieve asset data, and transmit user actions or preferences. The wearable device 202 may also incorporate input mechanisms, such as touch-sensitive surfaces, buttons, voice recognition, or motion sensors, allowing users to provide commands, make selections, or manipulate virtual assets within the metaverse environment. The user device 202 for visualizing assets in the metaverse is designed to enhance the user's experience and immersion in the training sessions and experience the hazardous event in a realistic manner. It enables users to perceive, interact with, and navigate through virtual assets, objects, obstacles, hazards and environments seamlessly, thereby providing a novel and immersive way to experience the virtual training of different hazardous events and react to the same within the metaverse.

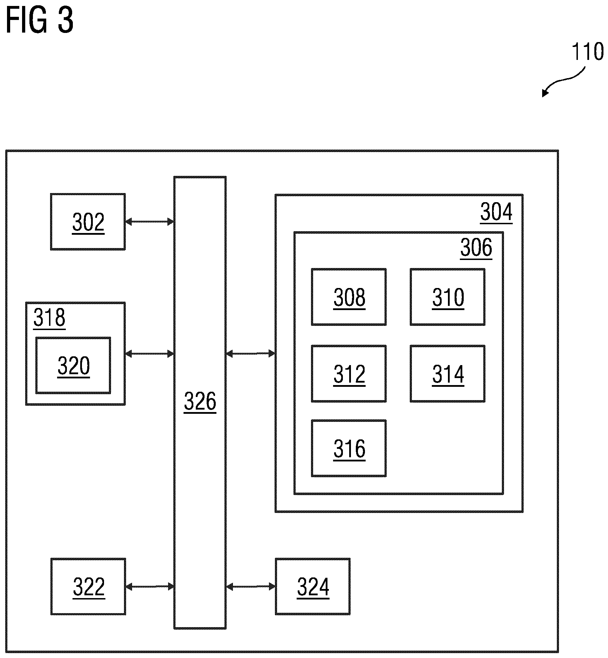

FIG 3 is a block diagram of an exemplary apparatus 110 accurately allocating one or more tasks to workers on occurrence of a hazardous event in an industrial environment, according to an embodiment of the present invention. In an exemplary embodiment, the apparatus 110 is communicatively coupled to the one or more virtual assets 104-1 to 104-N in the computer simulated environment 102.

The apparatus 110 may be a personal computer, a laptop computer, a tablet, a server, a virtual machine, and the like. The apparatus 110 includes a processing unit 302, a memory 304 comprising a module 306, a storage unit 318 comprising a database 320, an input unit 322, an output unit 324 and a bus 326.

The processing unit 302 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 302 may also include embedded controllers, such as generic or programmable logic devices or arrays, application specific integrated circuits, single-chip computers, and the like.

The memory 304 may be non-transitory volatile memory and/or non-volatile memory. The memory 304 may be coupled for communication with the processing unit 302, such as being a computer-readable storage medium. The processing unit 302 may execute instructions and/or code stored in the memory 304. A variety of computer-readable instructions may be stored in and accessed from the memory 304. The memory 304 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 304 includes the module 306 stored in the form of machine-readable instructions on any of the above-mentioned storage media and may be in communication to and executed by the processing unit 302. When the machine-readable instructions are executed by the processing unit 302, the module 306 causes the processing unit 302 to accurately allocate one or more tasks to workers 114-1 to 114-N on occurrence of a hazardous event in an industrial environment.

The module 306 further comprises a rendering module 308, a data acquisition module 310, a behavior matrix generation module 312, a mapping module 314, and a task allocation module 316.

The rendering module 308 is configured for rendering one or more virtual assets (104-1 to 104-N) in the computer simulated environment 102. The rendering module 312 loads simulation training session from a source such as a training simulator and then executes the simulated training session in the computer simulated environment 102. The rendering module 308 is configured for rendering structured exercises that replicate real-world situations in a controlled computer simulated environment 102. The training simulation scenarios are designed and rendered to help workers practice and improve their skills, knowledge, and decision-making abilities without the risks associated with actual operations. These scenarios are tailored to specific tasks or hazards found in the workplace and are essential for effective training programs. The training simulation scenarios are designed and rendered in a manner such that the workers have an immersive and realistic experience of the hazardous event and can improve their skills based on the performance analysis.

The data acqusition module 310 is configured for acquiring data from the one or more sensors 204-1 to 204-N associated with the workers. The data acqusition module 310 is configured for acquiring data from heart rate sensors, accelerometers, gyroscopes, eye-tracking sensors, hand gesture and tracking sensors, position tracking sensors, electrodermal sensors, temperature sensors, integrated motion sensors, proximity sensors, pressure sensors, audio sensors, video cameras, biometric sensors, haptic sensors, and EEG sensors.

The bheavior matrix generation module 312 is configured for generating a behavior matrix of each of the workers in the training session based on the data acquired from the one or more sensors. The behavior matrix is designed based on a response of the worker to the hazardous event in the training session. The bheavior matrix generation module 312 is configured for identifying one or more objectives of the training session based on requirements of the training and a type of hazardous event. The bheavior matrix generation module 312 is configured for determining one or more key behavior and skills that workers need to demonstrate during the training based on the objectives of the training. The bheavior matrix generation module 312 is configured for defining one or more behavioral indicators that demonstrate proficiency of the one or more tasks performed by the workers during the training. The bheavior matrix generation module 312 is configured for defining a scoring system that quantifies the performance of the one or more workers based on the data acquired from the one or more sensors and the defined behavioral indicators. The bheavior matrix generation module 312 is configured for generating the behavior matrix for each of the workers participating in the training session based on the performance of the one or more workers in the simulated training session.

The mapping module 314 is configured for mapping each of the workers to one or more tasks defined in the training session based the behavior matrix of each of the one or more workers, wherein the one or more tasks are actions to be performed by the workers in order to contain the hazard in the training session. The mapping module 314 is configured for identifying a skill type and skill level of each of the workers from the corresponding behavior matrix. The mapping module 314 is configured for defining one or more tasks to be performed by the workers during the occurrence of the hazardous event. The mapping module 314 is configured for mapping each of the workers to the one or more tasks based on the defined skill type and skill level of each of the workers.

The task allocation module 316 is configured for allocating the one or more tasks to each of the one or more workers when the hazardous event occurs in the real-world in the industrial environment based on the results of the mapping module 314.

The processing unit 302 is configured for performing all the functionality of the module 306. The processing unit 302 is configured to execute a simulated training session in the computer simulated environment, wherein the one or more workers participate in the training session via user devices. The processing unit 302 is configured to acquire data from one or more sensors associated with the workers. The one or more sensors configured to acquire data pertaining to performance of one or more workers in the training session. The processing unit 302 is configured to generate the a behavior matrix for each of the workers in the training session based on the data acquired from the one or more sensors. The behavior matrix is designed based on a response of the worker to the hazardous event in the training session. The processing unit 302 is configured to map each of the workers to one or more tasks defined in the training session based the behavior matrix of each of the one or more workers. The one or more tasks are actions to be performed by the workers in order to contain the hazard in the training session. The processing unit 302 is configured to allocating the one or more tasks to each of the one or more workers when the hazardous event occurs in the real-world in the industrial environment based on the mapping.

The storage unit 318 comprises the database 320 for storing personal information of the workers, data from one or more sensors, and corresponding behavior matrix of each of the workers, and so forth. The database 320 also stores one or more training sessions, scoring system etc. The storage unit 318 and/or database 320 may be provided using various types of storage technologies, such as solid state drives, hard disk drives, flash memory, and may be stored in various formats, such as relational databases, non-relational databases, flat files, spreadsheets, and extended markup files, etc. The database 320 may also be decentralized sorage system such as a blockchain.

The input unit 322 may provide ports to receive input from input devices such as keypad, touch-sensitive display, camera (such as a camera receiving gesture-based inputs), etc. capable of receiving access requests, authorization requests, etc. the The display unit 324 may provide ports to output data via output device with a graphical user interface for displaying the plurality of digital twins in the computer simulated virtual environment. The bus 326 acts as interconnect between the processing unit 302, the memory 304, the storage unit 318, the input unit 322, and the display unit 324.

Those of ordinary skilled in the art will appreciate that the hardware depicted in FIG 3 may vary for particular implementations., for example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

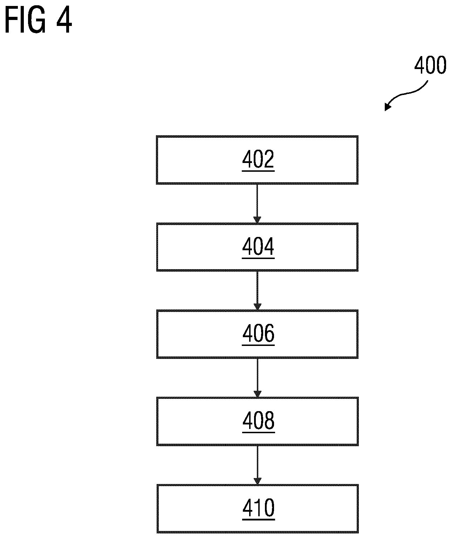

FIG 4 is a flowchart depicting steps of a method 400 for accurately allocating one or more tasks to workers on occurrence of a hazardous event in an industrial environment, accordingly to an embodiment of the present invention.

The "hazardous event" refers to an emergency event which occurs suddenly and poses a risk of injury, illness, or damage to workers, equipment, or the environment. Identifying and understanding these hazards is crucial for maintaining a safe and healthy workplace. In some scenarios, hazardous events are divided into four levels according to factors such as the property, the severity, the controllability, the influence range and the like of the hazardous event according to the national emergency public event general emergency plan: class i (extra heavy), class ii (heavy), class iii (larger) and class iv (general). According to the occurrence process, property and mechanism of the emergent common events, the emergent events are divided into four types: natural disasters, accident disasters, public health events, social security events and the like. The hazardous events refers to different levels and different types of hazardous events which occur when people perform production activities, such as a laboratory explosion scene, a gas station fire scene, a high-altitude suspension operation high-drop scene, a welding operation electric shock scene, a gas and gas leakage scene for catering, a power distribution room fire scene, a mechanical injury scene of a common product warehouse, an explosion scene of a toxic commodity warehouse, a hazardous chemical leakage scene of a corrosive commodity warehouse, a mechanical injury scene of a refrigeration house, a fire scene of an old-age institution, a fire scene of a business supermarket, a poisoning scene of a liquid ammonia filling station, a liquid ammonia transportation leakage scene and the like.

At step 402, a simulated training session is executed in the computer simulated environment 102. The one or more workers 114-1 to 114-N participate in the training session via user devices 202. In the present invention, the simulated training session is executed for each possible hazardous events such that the workers and operators can be trained on the training simulation scenarios. The training sessions are structured exercises that replicate real-world situations in a controlled computer simulated environment. The training sessions are designed to help workers practice and improve their skills, knowledge, and decision-making abilities without the risks associated with actual operations. The training sessions are tailored to specific tasks or hazards found in the workplace and are essential for effective training programs. The training sessions are designed in a manner such that the workers have an immersive and realistic experience of the hazardous event and can improve their skills based on the performance analysis. In an example, the different training scenarios needs to be carried out on each emergency scene, environmental scenes, character roles, equipment facilities, animations, special effects and the like are researched and developed according to emergency knowledge contents, different emergency scenes are loaded according to business needs, and a practical training environment with strong immersion and strong interactivity is constructed.

For the present invention, the training sessions are generated based on a simulation sequence of the industrial environment comprising one or more assets 106-1 to 106-N. The virtual assets 104-1 to 104-N correspond to real-world objects in the industrial environment such as the one or more assets 106-1 to 106-N including but not limited to motors, gears, bearings, shafts, switchgears, rotors, circuit breakers, protection devices, remote terminal units, transformers, reactors, disconnectors, gear-drive, gradient coils, magnet, radio frequency coils etc. Exemplary technical systems include turbines, large drives, Magnetic Resonance Imaging (MRI) scanner, etc. The virtual assets 104-1 to 104-N are commonly generated simultaneously with the real devices and systems, such as processing equipment and sensors in the facility. Once created by a specific vendor for their own specific equipment, the virtual asset can be used to represent the assets in a digital representation of a real-world system. The virtual asset 104-1 to 104-N is created such that it is identical in form and behavior to the corresponding machine. The virtual asset thus generated may be a dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on.

The plurality of virtual assets 104-1 to 104-N in the training sessions can be visualized in the computer simulated virtual environment 102, for example, in the metaverse. It can be understood as a virtual world of the industrial environment wherein the plurality of virtual assets 104-1 to 104-N are interacting with one another in the simulated training session and rendered to the workers 114-1 to 114-N for training on selected hazardous events. Such virtual assets 104-1 to 104-N are in particular accessible by the user, i.e. virtual assets 104-1 to 104-N accessible from the real/physical world., for example, it is possible that the user can access the plurality of virtual assets 104-1 to 104-N in the metaverse via an interface, e.g., a virtual reality (VR) or augmented reality (AR) interface. The counterpart of the computer-simulated environment does not necessarily have to exist but can be, for example, a three-dimensional model of an asset in the industrial environment.

For the present invention, the uses or workers 114-1 to 114-N in the metaverse visualizes the one or more training sessions by entering into metaverse through their respective devices (not shown). In other words, the user requires a device (or a hardware device) to access the virtual assets 104-1 to 104-N and experience the training session in the metaverse. The "workers" or sometimes referred to as "users" in the metaverse refer to individuals who participate in and interact with the virtual assets in the industrial metaverse. Users engage with the metaverse through various devices, such as VR, headsets, AR glasses, MR headsets, holographic displays, smartphones, tablets, or personal computers, accessing virtual environments, experiences, and services. In an example, the device may be a virtual reality (VR) headset such as Oculus Quest 2, HTC Vive Pro 2, Sony PlayStation VR, Valve Index etc. In another example, the device may be an augmented reality (AR) headset such as Microsoft HoloLens 2, Magic Leap One, Google Glass Enterprise Edition 2, Epson Moverio BT-300, etc. The devices comprise sensors to track users' movements, gestures, and interactions, as well as to provide environmental feedback for a more immersive experience. In an example, the sensors in the device may include accelerometers, gyroscopes, magnetometers, proximity sensors, depth sensors, time of flight sensors, eye tracking sensors, inertial measurement units (IMUs), cameras, and so on.

At step 404, data is acquired from one or more sensors associated with the workers, the one or more sensors configured to acquire data pertaining to performance of one or more workers in the training session.

The workers 114-1 to 114-N participate in the training session through various devices, such as VR, headsets, AR glasses, MR headsets, holographic displays, smartphones, tablets, or personal computers, accessing virtual environments, experiences, and services. In an example, the device may be a virtual reality (VR) headset such as Oculus Quest 2, HTC Vive Pro 2, Sony PlayStation VR, Valve Index etc. In another example, the device may be an augmented reality (AR) headset such as Microsoft HoloLens 2, Magic Leap One, Google Glass Enterprise Edition 2, Epson Moverio BT-300, etc. The devices comprise sensors to track users' movements, gestures, and interactions, as well as to provide environmental feedback for a more immersive experience. In an example, the sensors in the device may include accelerometers, gyroscopes, magnetometers, proximity sensors, depth sensors, time of flight sensors, eye tracking sensors, inertial measurement units (IMUs), cameras, and so on. The sensors provide data pertaining to performance of the users in the training session. The data collected from the one or more sensors can be personal information, training progress data, performance data, interaction data, engagement and participation data, behavioral metrics data, physiological data, environmental interaction data, feedback data, etc.

According to an embodiment, the one or more sensors comprises at least one of: heart rate sensors, accelerometers, gyroscopes, eye-tracking sensors, hand gesture and tracking sensors, position tracking sensors, electrodermal sensors, temperature sensors, integrated motion sensors, proximity sensors, pressure sensors, audio sensors, video cameras, biometric sensors, haptic sensors, and EEG sensors.

The one or more sensors can either be installed in the user device or outside of the user device.

The devices comprise sensors to track users' movements, gestures, and interactions, as well as to provide environmental feedback for a more immersive experience. The one or more sensors include wearable sensors such as heart rate monitors for tracking heart rate and assess stress levels, accelerometers and gyroscopes for measuring movement, posture, and physical activity of the workers, electrodermal activity (EDA) sensors for monitoring skin conductance and assess physiological responses to stress and engagement, temperature sensors for monitoring body temperature and identify signs of physical stress of workers in the training session. The one or more sensors include eye-tracking sensors such as eye-tracking cameras for monitoring where the worker is looking, measuring focus and attention, pupil dilation sensors for assessing engagement and cognitive load by tracking changes in pupil size for workers in the training session. The one or more sensors include hand and gesture tracking sensors such as motion capture gloves for tracking hand movements and gestures, ensuring correct handling of tools and equipment in the training session, kinetic sensors for capturing full-body movements and gestures, used in computer simulated environments. The one or more sensors include sensors integrated in the AR/VR headset such as integrated motion sensors for tracking head movements and orientation in virtual environments, and positional tracking systems for monitoring the worker's position and movement within the simulated training session. The one or more sensors include environmental sensors such as proximity sensors for detecting the distance between the worker and potential hazards or objects in the environment, and pressure sensors for measuring force applied on tools or machinery, ensuring correct operation. The one or more sensors include audio sensors such as microphones for capturing verbal communication and assess clarity and effectiveness, noise dosimeters for measuring exposure to noise levels and ensure compliance with safety standards. The one or more sensors include video cameras such as high-resolution cameras: for record training sessions for later analysis of behavior and actions. The one or more sensors include biometric sensors such as fingerprint scanners for ensuring the identity of the worker participating in the training, facial recognition cameras for monitoring facial expressions and emotional responses. The one or more sensors include smart PPE (Personal Protective Equipment), smart helmets, smart vests with built-in sensors. The one or more sensors include haptic feedback devices for providing tactile feedback during training, enhancing realism and engagement.

In a preferred embodiment, the one or more sensors are EEG sensors installed on a scalp of the one or more workers 114-1 to 114-N in order to acquire electrical activity from the brain during the training session. The EEG (Electroencephalography) sensors are devices used to record electrical activity in the brain. The EEG sensors measure voltage fluctuations resulting from ionic current flows within the neurons of the brain. Advantageously, the EEG sensors are be used to acquire behavior data for workers getting trained for hazards in an industrial environment. The EEG sensors monitor cognitive load and stress experienced by workers during training, ensuring tasks are not overly demanding. Furthermore, tracking brain activity patterns associated with stress to identify high-stress scenarios and improve training programs. The EEG sensors can track whether workers are paying attention to critical tasks or instructions during training, an also identify periods of inattention or distraction to improve engagement strategies. Furthermore, using data from EEG sensors it is analyzed how workers make decisions under stress and improving decision-making skills. In an example, the one more workers 114-1 to 114-N are equipped with EEG headsets that monitor brain activity during the training. The EEG data is collected throughout the training sessions, capturing brain activity related to attention, stress, and cognitive load. Additional data, such as task performance and response times, are also recorded.

In another preferred embodiment, the one or more sensors also include GAIT sensors. GAIT sensors are devices used to analyze the gait, which is the manner or pattern of walking. The GAIT sensors are typically used in clinical and sports settings to study movement patterns, detect abnormalities, and improve performance. GAIT analysis involves measuring various parameters related to walking, such as stride length, speed, and foot placement. The GAIT sensors include at least one of: Inertial Measurement Units (IMUs), pressure sensors, optical motion capture systems, force plates, electromyography (EMG) sensors, etc. During the simulated training sessions, data on stride length, speed, pressure distribution, and muscle activity are collected.

At step 406, a behavior matrix is generated for each of the workers in the training session based on the data acquired from the one or more sensors. The behavior matrix is designed based on a response of the worker to the hazardous event in the training session. The behavior matrix is a structured tool used to evaluate, monitor, and guide the behavior and performance of individuals within specific contexts, such as training programs, workplace environments, or educational settings. It typically outlines expected behaviors, skills, or competencies, and provides criteria for assessing how well individuals meet these expectations. In context of the present invention, the behavior matrix is generated for assessing a performance of the workers in the training session.

The generation of the behavior matrix is based on the data collected from the one or more sensors such as personal information, training progress data, performance data, interaction data, engagement and participation data, behavioral metrics data, physiological data, environmental interaction data, feedback data, etc. The behavior matrix is generated for the workers participating in the training scenario based on the data received from the sensors in the user devices during the training session. In an example, the behavior matrix is based on engagement and participation data such as logins and session duration data that tracks how often and how long participants engage with the training, activity completion rates data that measures the completion of specific interactive activities or tasks, participation data that tracks involvement in collaborative or discussion-based components. In another example, the behavior matrix is based on behavioral metrics such as decision-making patterns which is done based on analysis of choices made during simulations, problem solving approaches which is based on evaluation of methods used to tackle training scenarios, consistency in actions that tracks if actions align with learned protocols and best practices. In another example, the behavior matrix is based on spatial and movement data of the workers such as movement tracking data that records physical movements within the virtual environment, such as walking, reaching, and bending, posture and positioning data that monitors body posture and positioning during tasks to assess ergonomics and efficiency, and proximity data that measures the distance to hazards or objects to ensure safe practices are followed. In another example, the behavior matrix is based on physiological data such as heart rate monitoring data that tracks heart rate to assess stress levels and physiological responses to scenarios, gaze tracking data that monitors eye movements to see where the participant is focusing their attention, biometric data such as pupil dilation and skin conductance to gauge engagement and emotional responses. In another example, the behavior matrix is based on environmental interaction data such as object interaction that records how and when workers interact with virtual objects and tools, task completion data that measures the accuracy and efficiency of task completion within the training session.

According to an embodiment, the method of generating the behavior matrix for each of the workers comprises identifying one or more objectives of the training session based on requirements of the training and a type of hazardous event. The one or more objective of the behavior matrix can be clearly defined for the training program, such as improving safety compliance, enhancing emergency response skills, or reducing workplace accidents. The one or more objectives can be defined based on requirements of the training such as high accuracy of tasks by the workers, quick decision making by the workers, less reaction time of the workers etc. Such requirements of the training can be defined by the trainers or the designers of the training sessions. Furthermore, the one or more objectives of the training session is identified based on the type of the hazardous event. In an example, type of hazardous events include but not limited to, chemical hazards (toxic substances, flammable and combustible material, corrosive material, reactive chemicals, etc.), physical hazards (temperatures, radiation, vibration, etc.), biological hazards (microorganisms, allergens, biohazardous waster), mechanical hazards (moving machinery, falling objects, sharp objects), electrical hazards (electric shock, arc flash, electrical fires), fire and explosion hazards (combustible dust, flammable gas and liquids, pressurized containers, etc.), environmental hazards (pollutants, waste disposal, spill and leaks) and the like. Some examples of chemical hazards are exposure to benzene (toxic substance), handling of gasoline (flammable material), use of sulfuric acid (corrosive material), storage of sodium metal (reactive chemical), etc. Some examples of physical hazards are working near loud machinery (noise), welding in a confined space (radiation), operating in a freezer warehouse (temperature extremes), using vibrating tools like jackhammers (vibration), etc. Some examples of biological hazards are handling contaminated needles (biohazardous waste), exposure to Legionella bacteria in cooling towers (microorganisms), working in damp environments with mold (allergens), etc. Some examples of mechanical hazards are operating a lathe with exposed rotating parts (moving machinery), storing tools on high shelves (falling objects), using box cutters without proper guards (sharp objects), etc. Some examples of electrical hazards are working with exposed wiring (electric shock), performing maintenance on electrical panels (arc flash), overloading power strips (electrical fires) etc. Some examples of fire and explosion hazards are dust accumulation in grain processing facilities (combustible dust), leaks in gas pipelines (flammable gases), handling propane tanks (pressurized containers), etc.

Further, the method comprises determining one or more key behavior and skills that workers need to demonstrate during the training based on the objectives of the training. In an example, the key behavior and skills that workers need to demonstrate during a training are: attention to detail, decision making, communication, stress management, use of personal protective equipment (PPE), and adherence to safety protocols. It is to be understood that these key behaviors and skills can vary based on objective of the training defined by a trainer.

Further, the method comprises defining one or more behavioral indicators that demonstrate proficiency of the one or more tasks performed by the workers during the training. Once the key behavior and skills of the workers are determined, the system defines behavioral indicators that demonstrate proficiency of the one or more tasks performed by the workers during the training. The one or more sensors observe the one or more tasks performed by the workers during the training session. In an example, the one or more tasks performed by the workers during the training session for a chemical spill are: workers initiate the emergency alarm, worker informs the emergency response team (ERT), worker alerts other workers and follows the evacuation procedure without panic and evacuate to pre-designated assembly points; worker performs headcount to ensure safety; worker ensures procedure to contain the spill is initiated, etc. A proficiency of the tasks performed by the workers defines the behavioral indicators. The behavioral indicator is defined for each key behavior and skill determined. The behavioral indicator defines what one or more tasks to be performed in order to correctly contain the hazard. In an example, for the behavior skill "attention to detail" - the behavior indicator is correctly identifying hazards and following SOP. In another example, for the behavior skill "decision making", the behavior indicator is making timely and appropriate decisions during the hazardous event. In another example, for the behavior skill "communication", the behavior indicator is clearly and effectively communicating with other workers.

Further, the method comprises defining a scoring system that quantifies the performance of the one or more workers based on the data acquired from the one or more sensors and the defined behavioral indicators. The scoring system is defined based on which the performance of the workers can be evaluated. Different performance levels that define a skill level of the workers for the particular behavior skill is defined. In an example, the scope system can include:
1. Excellent: Consistently exceeds expectations.
2. Good: Meets expectations.
3. Needs Improvement: Partially meets expectations.
4. Poor: Does not meet expectations.

Further, the method comprises generating the behavior matrix for each of the workers participating in the training session based on the performance of the one or more workers in the simulated training session. The behavior matrix is generated by evaluating the performance of the workers by observing the one or more tasks performed by the workers and corresponding proficiency of performing those tasks demonstrating the behavior skills defined for the training session.

An example of a behavior matrix defined for a chemical spill is shown below in Table 1.

**Table 1**

| **Key Behavior/Skil l** | **Excellent (4)** | **Good (3)** | **Needs Improvemen t (2)** | **Poor (1)** | **Scor e** |
|---|---|---|---|---|---|
| Hazard Identification | Identifies all potential spill hazards | Identifies most spill hazards | Identifies some spill hazards | Fails to identify spill hazards | 3 |
| Decision-Making | Quickly makes optimal containmen t decisions | Makes good containment decisions | Makes fair containment decisions | Makes poor containment decisions | 4 |
| Communicati on | Clearly and effectively communicat es actions | Communica tes actions mostly clearly | Communica tes actions partially clearly | Communicati on is unclear | 2 |
| Stress Management | Remains calm and focused throughout | Mostly calm, minor signs of stress | Occasionally stressed | Frequently stressed, impacts performance | 4 |
| Use of PPE | Always correctly uses PPE | Mostly uses PPE correctly | Occasionally uses PPE incorrectly | Frequently uses PPE incorrectly | 4 |
| Adherence to Protocols | Strictly follows all response protocols | Follows most protocols | Occasionally deviates from protocols | Frequently deviates from protocols | 4 |

According to an embodiment, the method further comprises classifying each of the workers into a skill level based on the behavior matrix, wherein the skill level of workers is one of: competent, semi-competent, and non-competent. In an example, a further classification of the workers can be done based on the performance of the workers evaluated from the behavior matrix.

According to an embodiment, the method further comprises storing personal information of the workers, data from one or more sensors, and corresponding behavior matrix of each of the workers in a blockchain.

At step 408, each of the workers are mapped to one or more tasks defined in the training session based the behavior matrix of each of the one or more workers, wherein the one or more tasks are actions to be performed by the workers in order to contain the hazard in the training session. It will be appreciated that mapping of the tasks to the worker or worker profiles is done based on a performance of the workers during the training session. The mapping is done based on the proficiency level of the behavioral skill of the workers demonstrated during the training session. It is possible the not all workers are not proficient in all tasks, and hence it is important to observe the behavioral skills of the workers and then map the workers to the tasks that they are most competent at in order to contain the hazard in the most efficient manner. In an example, one or more tasks to be performed during a chemical spill session such as workers initiate the emergency alarm, worker informs the emergency response team (ERT), worker alerts other workers and follows the evacuation procedure without panic and evacuate to pre-designated assembly points; worker performs headcount to ensure safety; worker ensures procedure to contain the spill is initiated, etc, can be mapped to one or more workers that are classified as "competent" for performing these tasks.

At step 410, the one or more tasks are allocated to each of the one or more workers when the hazardous event occurs in the real-world in the industrial environment based on the mapping. In an example, when the actual hazardous event occurs in the industrial environment, the system is configured to allocate one or more tasks to each of the workers in real-time based on a skill level of the worker demonstrated during the training session. This allocation makes sure that workers that are competent to perform a task during the hazardous event in real-time based on their performance are only allocated the particular task in order to contain the hazardous event.

Advantageously, the present invention provides a sytem and method for accurately allocating one or more tasks to workers on occurrence of a hazardous event in an industrial environment. The present invention provides method for accurately analyzing performance of the workers during a training session and then mapping the one or more tasks to be performed to the workers when the hazardous event occurs in real-time. It is possible the not all workers are not proficient in all tasks, and hence it is important to observe the behavioral skills of the workers and then map the workers to the tasks that they are most competent at in order to contain the hazard in the most efficient manner.

Therefore, in order to improve the training pertinence and timeliness, a new mode method and means are urgently adopted. The invention relates to an immersive interactive safety production emergency response practical training system which is used for training and examining for different scenes, different emergency types, different emergency response levels, multiple roles and multiple tasks of a single person and is realized by adopting a virtual reality technology, and the immersive interactive safety production emergency response practical training system is a novel emergency response practical training mode.

Those skilled in the art will recognize that, unless specifically indicated or required by the sequence of operations, certain steps in the processes described above may be omitted, performed concurrently or sequentially, or performed in a different order.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### List of references

- 100: system
- 102: computer simulated environment
- 104-1 to 104-N: plurality of virtual assets
- 106-1 to 106-N: one or more assets
- 108: communication network
- 110: apparatus
- 112: database
- 114-1 to 114-N: one or more workers
- 202: user device
- 204-1 to 204-N: one or more sensors
- 302: one or more processing units
- 304: memory unit
- 306: module
- 308: rendering module
- 310: data acquisition module
- 312: behavior matrix generation module
- 314: mapping module
- 316: task allocation module
- 318: storage unit
- 320: database
- 322: input unit
- 324: output unit
- 326: bus
- 400: flowchart depicting steps of a method for accurately allocating one or more tasks to workers on occurrence of a hazardous event in an industrial environment

## Claims

1. A method (400) for accurately allocating one or more tasks to workers (114-1 to 114-N) on occurrence of a hazardous event in an industrial environment, the method comprising:
executing, by the processing unit (302), a simulated training session in the computer simulated environment, wherein the one or more workers (114-1 to 114-N) participate in the training session via user devices (202);
acquiring, by the processing unit (302), data from one or more sensors (204-1 to 204-N) associated with the workers (114-1 to 114-N), the one or more sensors configured to acquire data pertaining to performance of one or more workers in the training session;
generating, by the processing unit (302), a behavior matrix for each of the workers (114-1 to 14-N) in the training session based on the data acquired from the one or more sensors, wherein the behavior matrix is designed based on a response of the worker to the hazardous event in the training session;
mapping, by the processing unit, each of the workers (114-1 to 14-N) to one or more tasks defined in the training session based the behavior matrix of each of the one or more workers, wherein the one or more tasks are actions to be performed by the workers (114-1 to 14-N) in order to contain the hazard in the training session; and
allocating, by the processing unit, the one or more tasks to each of the one or more workers (114-1 to 14-N) when the hazardous event occurs in the real-world in the industrial environment based on the mapping.

2. The method (400) according to claim 1, wherein the one or more sensors (204-1 to 204-N) comprises at least one of: heart rate sensors, accelerometers, gyroscopes, eye-tracking sensors, hand gesture and tracking sensors, position tracking sensors, electrodermal sensors, temperature sensors, integrated motion sensors, proximity sensors, pressure sensors, audio sensors, video cameras, biometric sensors, haptic sensors, and EEG sensors.

3. The method (400) according to any of the preceding claims 1 or 2, wherein generating the behavior matrix for each of the workers further comprises:
identifying, by the processing unit (302), one or more objectives of the training session based on requirements of the training and a type of hazardous event;
determining, by the processing unit, one or more key behavior and skills that workers (114-1 to 14-N) need to demonstrate during the training based on the objectives of the training;
defining, by the processing unit, one or more behavioral indicators that demonstrate proficiency of the one or more tasks performed by the workers (114-1 to 14-N) during the training;
defining, by the processing unit, a scoring system that quantifies the performance of the one or more workers based on the data acquired from the one or more sensors (204-1 to 204-N) and the defined behavioral indicators; and
generating, by the processing unit, the behavior matrix for each of the workers participating in the training session based on the performance of the one or more workers in the simulated training session.

4. The method (400) according to any of the preceding claims, further comprising classifying each of the workers (114-1 to 14-N) into a skill level based on the behavior matrix, wherein the skill level of workers is one of: competent, semi-competent, and non-competent.

5. The method (400) according to any of the preceding claims, wherein mapping each of the workers (114-1 to 14-N) to a one or more tasks defined in the training session based the behavior matrix of each of the one or more workers comprises:
identifying, by the processing unit (302), a skill type and skill level of each of the workers (114-1 to 14-N)from the corresponding behavior matrix;
defining, by the processing unit, one or more tasks to be performed by the workers (114-1 to 14-N) during the occurrence of the hazardous event; and
mapping, by the processing unit, each of the workers (114-1 to 14-N) to the one or more tasks based on the defined skill type and skill level of each of the workers.

6. The method (400) according to any of the preceding claims, further comprising storing personal information of the workers, data from one or more sensors, and corresponding behavior matrix of each of the workers in a blockchain.

7. An apparatus (110) for accurately allocating one or more tasks to workers (114-1 to 14-N) on occurrence of a hazardous event in an industrial environment, the apparatus comprising:
one or more processing units (302);
a memory (304) communicatively coupled to the one or more processing units (302), the memory comprising a module stored in the form of machine-readable instructions executable by the one or more processing units, wherein the module is configured to perform the method steps according to claims 1 to 6.

8. A system (100) for accurately allocating one or more tasks to workers (114-1 to 14-N) on occurrence of a hazardous event in an industrial environment, the system comprising:
a computer simulated environment (102) for executing simulated training scenarios for the one or more workers;
one or more sensors (204-1 to 204-N) communicatively coupled to the computer simulated environment (102), wherein the one or more sensors acquire data pertaining to performance of one or more workers in the training session; and
an apparatus (110) according to claim 7, communicatively coupled to the one or more sensors and the computer simulated collaborative environment, wherein the apparatus is configured for accurately allocating one or more tasks to workers (114-1 to 14-N) on occurrence of a hazardous event in an industrial environment, according to any of the method claims 1 to 6.

9. A computer-program product, having computer-readable instructions stored therein, that when executed by a processing unit (302), cause the processing unit to perform method steps according to any of the claims 1 to 6.

10. A computer readable medium on which program code sections of a computer program are saved, the program code sections being loadable into and/or executable in a system to make the system execute the method steps according to any of the claims 1 to 6 when the program code sections are executed in the system (100).
